# EUROPEAN PATENT APPLICATION

(11) **EP 4 404 422 A2**
(43) Date of publication of application: **24.07.2024**
(21) Application number: 23218320.2
(22) Date of filing: 19.12.2023
(51) Int. Cl.: H02J 7/00

(54) **DISCHARGING CONTROL APPARATUS AND METHOD FOR BUS CAPACITOR, AND VEHICLE**

(30) Priority: 18.01.2023 CN 202310100653
(71) Applicant: XPT EDS (Hefei) Co., Ltd., Hefei City, Anhui 230601 (CN)
(72) Inventor: YU, Wenjie, Hefei, Anhui Province, 230601 (CN); HONG, Wencheng, Hefei, Anhui Province, 230601 (CN); WANG, Xiaofei, Hefei, Anhui Province, 230601 (CN)
(74) Representative: Vossius & Partner Patentanwälte Rechtsanwälte mbB

(57) **Abstract**

The disclosure relates to a discharging control apparatus for a bus capacitor, a discharging control method for a bus capacitor, and a vehicle including the discharging control apparatus for a bus capacitor. The discharging control apparatus for a bus capacitor according to an aspect of the disclosure includes: a discharging module connected to the bus capacitor and configured to form a discharging loop with the bus capacitor in response to a discharging control signal being at a first level, so as to discharge the bus capacitor through the discharging loop; and a control module connected to the discharging module and configured to control duration of discharging the bus capacitor through the discharging loop to be a preset duration in response to the discharging control signal being at the first level.

## Description

### Technical Field

The disclosure generally relates to electric vehicle technologies, and more specifically, to a discharging control apparatus for a bus capacitor, a discharging control method for a bus capacitor, and a vehicle including the discharging control apparatus for a bus capacitor.

### Background Art

Electric vehicles are a type of transportation means that uses electric energy for propulsion. With the increasing prominence of energy crisis and environmental issues, the development of efficient, energy-saving, low-noise, and zero-emission clean electric vehicles has become an inevitable trend in the automotive industry at home and abroad. Energy-saving, environmentally-friendly, safe, and reliable electric vehicles are gaining more and more attention from people.

A drive motor and a motor controller are used as important components in an electric vehicle for driving the vehicle. A bus capacitor of the motor controller carries a high-voltage direct-current voltage during the operation of the vehicle. To ensure the personal safety of occupants after the vehicle has been used or when a fault occurs in the vehicle, it is necessary to quickly discharge the voltage on the bus capacitor to a safe voltage or below using a discharging device.

Currently, there are no effective protective measures for the discharging device during the process of discharging the voltage on the bus capacitor to the safe voltage or below. Due to a fast voltage change, the discharging device needs to withstand a large power during the discharging process, which results in situations such as overheating, short circuits, and solder overflow of the discharging device, affecting the personal safety of the vehicle occupants.

### Summary

In order to solve or at least alleviate one or more of the above problems, the following technical solutions are provided.

According to a first aspect of the disclosure, a discharging control apparatus for a bus capacitor is provided. The discharging control apparatus includes: a discharging module connected to the bus capacitor and configured to form a discharging loop with the bus capacitor in response to a discharging control signal being at a first level, so as to discharge the bus capacitor through the discharging loop; and a control module connected to the discharging module and configured to control duration of discharging the bus capacitor through the discharging loop to be a preset duration in response to the discharging control signal being at the first level.

According to the discharging control apparatus for a bus capacitor according to an embodiment of the disclosure, the discharging module is further configured to disconnect, in response to the discharging control signal being at a second level, the discharging loop formed with the bus capacitor, so as to stop discharging the bus capacitor.

According to the discharging control apparatus for a bus capacitor according to one or any one of the above embodiments of the disclosure, the discharging control signal is from a motor controller, and is switched between the first level and the second level based on the control of the motor controller.

According to the discharging control apparatus for a bus capacitor according to one or any one of the above embodiments of the disclosure, the discharging module includes a first power switch, a third power switch, and a first resistor element. A gate of the first power switch is connected to a first terminal of the third power switch, a drain of the first power switch is connected to the first resistor element, and a source of the first power switch is grounded. The first terminal of the third power switch is connected to a power supply, a second terminal of the third power switch is grounded, and a third terminal of the third power switch is used to receive the discharging control signal.

According to the discharging control apparatus for a bus capacitor according to one or any one of the above embodiments of the disclosure, the control module includes a second power switch, a fourth power switch, a third resistor element, a fourth resistor element, and a capacitor element. A gate of the second power switch is connected to a first terminal of the fourth power switch via the fourth resistor element, a drain of the second power switch is connected to the gate of the first power switch, and a source of the second power switch is grounded. A second terminal of the fourth power switch is grounded, and a third terminal of the fourth power switch is used to receive the discharging control signal. The third resistor element is connected between the power supply and the capacitor element.

According to the discharging control apparatus for a bus capacitor according to one or any one of the above embodiments of the disclosure, the discharging module performs the following operations when the discharging control signal is at the first level: turning off the third power switch to increase a gate voltage of the first power switch to a power supply voltage, so as to turn on the first power switch; and forming a discharging loop with the bus capacitor via the first power switch and the first resistor element, so as to discharge the bus capacitor using the first resistor element.

According to the discharging control apparatus for a bus capacitor according to one or any one of the above embodiments of the disclosure, the discharging module performs the following operations when the discharging control signal is at the second level: turning on the third power switch to reduce the gate voltage of the first power switch to a zero voltage level, so as to turn off the first power switch; and disconnecting the discharging loop formed with the bus capacitor via the first power switch and the first resistor element, so as to stop discharging the bus capacitor.

According to the discharging control apparatus for a bus capacitor according to one or any one of the above embodiments of the disclosure, the control module performs the following operations when the discharging control signal is at the first level: turning off the fourth power switch element, and using the power supply to charge the capacitor element via the third resistor element, such that a voltage across both terminals of the capacitor element is greater than or equal to a gate-on voltage threshold of the second power switch, so as to turn on the second power switch; in response to the second power switch being turned on, reducing the gate voltage of the first power switch to a zero voltage level, so as to turn off the first power switch; and disconnecting the discharging loop formed with the bus capacitor via the first power switch and the first resistor element, so as to stop discharging the bus capacitor.

According to the discharging control apparatus for a bus capacitor according to one or any one of the above embodiments of the disclosure, the control module performs the following operations when the discharging control signal is at the second level: turning on the fourth power switch to form a discharging loop with the capacitor element via the fourth power switch and the fourth resistor element, so as to discharge the capacitor element using the fourth resistor element; and turning off the second power switch in response to a voltage across both terminals of the capacitor element being less than the gate-on voltage threshold of the second power switch.

According to the discharging control apparatus for a bus capacitor according to one or any one of the above embodiments of the disclosure, the preset duration is set based on one or more of the following: a power supply voltage, a resistance value of the third resistor element, a capacitance value of the capacitor element, and the gate-on voltage threshold of the second power switch.

According to a second aspect of the disclosure, a discharging control method for a bus capacitor is provided. The method includes: forming a discharging loop with the bus capacitor via a discharging module in response to a discharging control signal being at a first level, to discharge the bus capacitor through the discharging loop; and controlling, via a control module, duration of discharging the bus capacitor through the discharging loop to be a preset duration in response to the discharging control signal being at the first level.

According to the discharging control method for a bus capacitor according to an embodiment of the disclosure, the method further includes: disconnecting, in response to the discharging control signal being at a second level, the discharging loop formed with the bus capacitor, so as to stop discharging the bus capacitor.

According to the discharging control method for a bus capacitor according to one or any one of the above embodiments of the disclosure, the discharging control signal is from a motor controller, and is switched between the first level and the second level based on the control of the motor controller.

According to a third aspect of the disclosure, a vehicle is provided. The vehicle includes the discharging control apparatus for a bus capacitor according to the first aspect of the disclosure.

According to the discharging control apparatus for a bus capacitor according to one or more embodiments of the disclosure, the discharging control of the bus capacitor can be realized through the control of the discharging control signal, and the discharging duration of the bus capacitor can be controlled to be the preset duration, thereby effectively protecting the discharging device used for discharging the bus capacitor, improving the safety performance of the vehicle, and prolonging the service life of the discharging device. The discharging control apparatus for a bus capacitor according to one or more embodiments of the disclosure has the advantages of simple control, easy implementation, and cost saving.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a schematic diagram of a structure of a discharging control apparatus for a bus capacitor according to one or more embodiments of the disclosure;
FIG. 2 is a schematic diagram of a circuit of a discharging control apparatus for a bus capacitor according to one or more embodiments of the disclosure; and
FIG. 3 is a flowchart of a discharging control method for a bus capacitor according to one or more embodiments of the disclosure.

### Detailed Description of Embodiments

Exemplary embodiments of the disclosure are described in detail below, and examples of these embodiments are illustrated in the drawings. It should be noted that the following description is provided for explanation and illustration, and therefore should not be construed as limiting the disclosure. Without departing from the principle of the disclosure, those skilled in the art can make, according to actual requirements, electrical, mechanical, logical, and structural changes to these embodiments without departing from the scope of the disclosure. Further, those skilled in the art can understand that for any specific application scenario or actual requirement, it is possible to combine one or more features of the different embodiments described below.

The terms such as "include" and "comprise" are used to indicate that in addition to units and steps that are directly and clearly described in this specification, other units and steps that are not directly or clearly described are not excluded in the technical solutions of the disclosure. The terms such as "first" and "second" are not used to indicate sequences of the units in terms of time, space, size, etc., and are merely used to distinguish between the units.

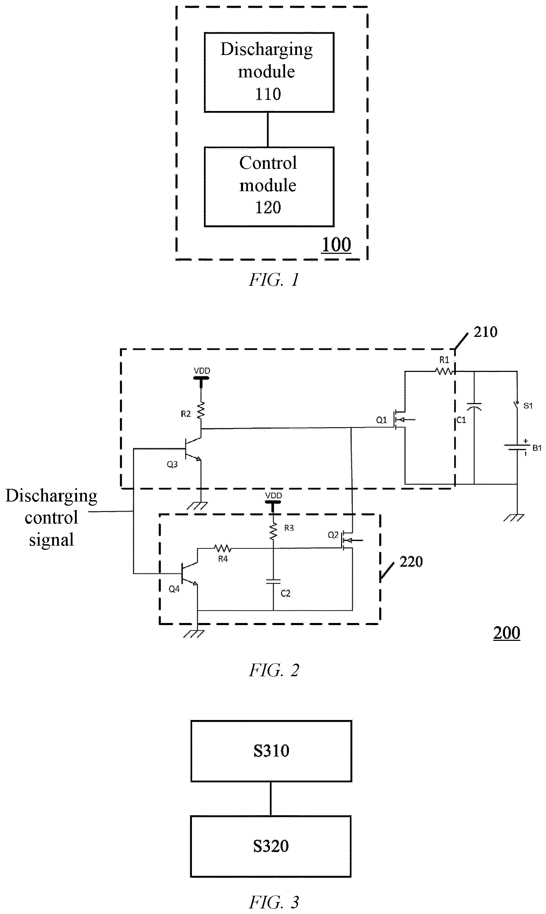

FIG. 1 is a schematic diagram of a structure of a discharging control apparatus for a bus capacitor according to one or more embodiments of the disclosure.

As shown in FIG. 1, the discharging control apparatus 100 for a bus capacitor includes a discharging module 110 and a control module 120.

The discharging module 110 is connected to the bus capacitor (not shown in FIG. 1), and is configured to form, in response to a discharging control signal being at a first level, a discharging loop with the bus capacitor, so as to discharge the bus capacitor through the discharging loop. Optionally, the discharging module 110 is further configured to disconnect, in response to the discharging control signal being at a second level, the discharging loop formed with the bus capacitor, so as to stop discharging the bus capacitor. The control module 120 is connected to the discharging module 110 and is configured to control duration of discharging the bus capacitor through the discharging loop to be a preset duration in response to the discharging control signal being at the first level.

Optionally, the discharging control signal may be from a motor controller, and is switched between the first level and the second level based on the control of the motor controller. Optionally, the discharging control signal may be alternatively from a vehicle control unit, and is switched between the first level and the second level based on the control of the vehicle control unit. Exemplarily, the first level may be set as a low level, and the second level may be set as a high level.

In an embodiment, the vehicle control unit may monitor status of an electric vehicle under various operating conditions, as well as faults of various components in real time, controls the bus capacitor to be discharged based on the status of the vehicle and fault types of the components, and communicates with the motor controller in real time. When the vehicle needs to discharge the bus capacitor, an active discharging instruction is sent to the motor controller, such that after receiving the active discharging instruction, the motor controller sets the discharging control signal to the low level and sends the discharging control signal to the discharging control apparatus 100 for the bus capacitor, to activate an active discharging function of the discharging module 110 and a timing protection function of the control module 120.

In an embodiment, when the bus capacitor needs to be discharged (for example, after the vehicle has been used or when a fault occurs in the vehicle), the motor controller may set the discharging control signal to the low level and send the discharging control signal to the discharging control apparatus 100 for a bus capacitor, to activate the active discharging function of the discharging module 110 and the timing protection function of the control module 120. After receiving the discharging control signal at the low level, the discharging module 110 can form the discharging loop with the bus capacitor, to discharge the bus capacitor through the discharging loop. The control module 120 can control, upon receiving the discharging control signal at the low level, discharging duration to the preset duration. It should be noted that the preset duration can be adjusted based on specific parameters of the control module 120, to flexibly control the discharging duration of the bus capacitor.

In an embodiment, when the active discharging function is stopped, the motor controller may set the discharging control signal to the high level, and send the discharging control signal to the discharging control apparatus 100 for a bus capacitor. After receiving the discharging control signal at the high level, the discharging module 110 may disconnect the discharging loop formed with the bus capacitor, to stop discharging the bus capacitor. Exemplarily, when a bus capacitor voltage value in a bus capacitor voltage signal is greater than a preset capacitor voltage threshold and duration of the bus capacitor voltage value being greater than a preset capacitor voltage threshold exceeds a preset duration threshold, it may be determined that the active discharging function is stopped. The preset capacitor voltage threshold may be a preset critical voltage used for determining whether the discharging of the bus capacitor is successful, such as 60 V The preset duration threshold may be a preset critical duration used for determining whether the discharging of the bus capacitor fails, such as 2s.

With reference to FIG. 2, a circuit structure and an operating principle of the discharging control apparatus 100 for a bus capacitor will be described in detail below.

FIG. 2 is a schematic diagram of a circuit of a discharging control apparatus for a bus capacitor according to one or more embodiments of the disclosure.

As shown in FIG. 2, the discharging control apparatus 200 for a bus capacitor includes a discharging module 210 and a control module 220.

The discharging module 210 includes a first power switch Q1, a third power switch Q3, a first resistor element R1, and a second resistor element R2. A gate of the first power switch Q1 is connected to a first terminal of the third power switch Q3, a drain of the first power switch Q1 is connected to the first resistor element R1, and a source of the first power switch Q1 is grounded. The first terminal of the third power switch Q3 is connected to a power supply VDD, a second terminal of the third power switch Q3 is grounded, and a third terminal of the third power switch Q3 is used to receive a discharging control signal. The first resistor element R1 may be operated as a discharging device to discharge the bus capacitor C1. The function of the discharging device is to reduce, within specified time, the voltage on the bus capacitor C1 to a set voltage (e.g., the human safety voltage of 36 V) or below by discharging electric energy through an own resistor, so as to ensure personal safety of personnel. Alternatively, in addition to being implemented as an individual resistor element, the discharging device may also be implemented as a resistor bank formed by two or more individual resistors connected in series and parallel. A resistance value of the discharging device can be determined based on a capacitance value of the bus capacitor C1 and a bus voltage. Determining the resistance value of the discharging device based on the capacitance value of the bus capacitor C1 and the bus voltage may provide the precise and safe discharging device, which is conducive to ensuring the safety of discharging the bus capacitor C1 through the discharging device while avoiding the additional cost of using a discharging device with a higher resistance value.

The control module 220 includes a second power switch Q2, a fourth power switch Q4, a third resistor element R3, a fourth resistor element R4, and a capacitor element C2. A gate of the second power switch Q2 is connected to a first terminal of the fourth power switch Q4 via the fourth resistor element R4. A drain of the second power switch Q2 is connected to the gate of the first power switch Q1, and a source of the second power switch Q2 is grounded. A second terminal of the fourth power switch Q4 is grounded, and a third terminal of the fourth power switch Q4 is used to receive the discharging control signal. The third resistor element R3 is connected between the power supply VDD and the capacitor element C2.

As shown in FIG. 2, the first power switch Q1 and the second power switch Q2 may be set as NMOS transistors, and the third power switch Q3 and the fourth power switch Q4 may be set as NPN transistors. The first power switch Q1 is set as the NMOS transistor, which can adapt to an operating voltage (e.g., 430 V) of a high-voltage direct-current power supply of the discharging module 210. The second power switch Q2 is set as the NMOS transistor, which has a high input impedance, so that an active discharging mode is exited when a gate-on voltage threshold is reached, thereby achieving precise control over the discharging duration. Setting the third power switch Q3 and the fourth power switch Q4 as the NPN transistors saves costs.

It should be noted that although the first power switch Q1 and the second power switch Q2 are illustrated as the NMOS transistors, and the third power switch Q3 and the fourth power switch Q4 are illustrated as the NPN transistors in FIG. 2, the first power switch Q1, the second power switch Q2, the third power switch Q3, and the fourth power switch Q4 may alternatively be implemented by other power switch elements without departing from the spirit and scope of the disclosure. For example, the third power switch Q3 and the fourth power switch Q4 may be set as MOS transistors.

Further, as shown in FIG. 2, when the bus capacitor C1 needs to be discharged (for example, after the vehicle has been used or when a fault occurs in the vehicle), the motor controller may set the discharging control signal to the low level and send the discharging control signal to the discharging control apparatus 200 for a bus capacitor, and in this case, a main relay S 1 connected to a storage battery B1 is turned off. When the active discharging function is stopped, the motor controller may set the discharging control signal to the high level and send the discharging control signal to the discharging control apparatus 200 for a bus capacitor.

Various operating states of the discharging module 210 and the control module 220 are further described with reference to FIG. 2.

In the discharging module 210, when the discharging control signal is at the low level, the third power switch Q3 is in an off state, the gate voltage of the first power switch Q 1 is increased to the power supply voltage to cause the first power switch be turned on, and in this case, the active discharging mode is entered. In the active discharging mode, a discharging loop is formed with the bus capacitor C1 via the first power switch Q1 and the first resistor element R1, to discharge the bus capacitor C1 using the first resistor element R1.

In the control module 220, when the discharging control signal is at the low level, the fourth power switch Q4 is in an off state. The power supply VDD charges the capacitor element C2 through the third resistor element R3. When the voltage across both terminals of the capacitor element C2 is greater than or equal to a gate-on voltage threshold of the second power switch Q2 through charging, the second power switch Q2 is turned on. When the second power switch Q2 is turned on, the gate voltage of the first power switch Q1 is reduced to a zero voltage level to cause the first power switch to be turned off. In this case, the active discharging mode is exited, and the discharging loop formed with the bus capacitor C1 via the first power switch Q 1 and the first resistor element R1 is disconnected, to stop discharging the bus capacitor C1, thereby controlling the duration of discharging the bus capacitor C1 through the first resistor element R1 to be the preset duration.

Through the above operations of the discharging module 210 and the control module 220 when the discharging control signal is at the low level, the control module 220 can control the duration of discharging the bus capacitor C1 through the discharging loop in the discharging module 210 to be the preset duration, thereby effectively protecting the discharging device (e.g., the first resistor element R1 shown in FIG. 2). Optionally, the preset duration may be set based on one or more of the following: a power supply voltage, a resistance value of the third resistor element R3, a capacitance value of the capacitor element C2, and the gate-on voltage threshold of the second power switch Q2. Alternatively, the third resistor element R3 and the capacitor element C2 may be respectively set as a variable resistor element and a variable capacitor element, thereby flexibly adjusting the duration of discharging the bus capacitor C1 through the discharging loop in the discharging module 210. Further, the connection or disconnection of the discharging loop is controlled by turning on or off the first power switch Q 1, thereby improving the control precision and reliability, achieving quick disconnection of the discharging loop at the appropriate time, reducing the heat generated by the discharging device, and prolonging the service life of the discharging device.

In the discharging module 210, when the discharging control signal is at the high level, the third power switch Q3 is in an on state, and the gate voltage of the first power switch Q1 is reduced to a zero voltage level to cause the first power switch to be turned off, so as to disconnect the discharging loop formed with the bus capacitor C1 via the first power switch Q1 and the first resistor element R1, and then stop discharging the bus capacitor C1 using the first resistor element R1.

In the control module 220, when the discharging control signal is at the high level, the fourth power switch Q4 is in an on state, so that a discharging loop is formed with the capacitor element C2 via the fourth power switch Q4 and the fourth resistor element R4, so as to discharge the capacitor element C2 using the fourth resistor element R4. When the voltage across both terminals of the capacitor element C2 is less than the gate-on voltage threshold of the second power switch Q2 through discharging, the second power switch Q2 is turned off. Optionally, discharging duration of the capacitor element C2 may be set based on one or more of the following: a resistance value of the fourth resistor element R4, the capacitance value of the capacitor element C2, and the gate-on voltage threshold of the second power switch Q2.

Through the above operations of the discharging module 210 when the discharging control signal is at the high level, the discharging module 210 can actively disconnect the discharging loop based on the level control of the discharging control signal, so as to stop discharging the bus capacitor C1, thereby effectively protecting the discharging device, such as the first resistor element R1 shown in FIG. 2.

Therefore, the discharging device and the various power switches are used to form the discharging control apparatus for a bus capacitor, and the hardware design of a power switch control circuit is used, so that the problem of timely connection or disconnection of the discharging loop where the discharging device is located can be solved. The motor controller provides the discharging control signal for the various power switches, thereby performing timely and accurate control on the connection or disconnection of the discharging loop where the discharging device is located, and therefore reducing the heat generated by the discharging device.

According to the discharging control apparatus for a bus capacitor in an aspect of the disclosure, the discharging control of the bus capacitor can be realized through the control of the discharging control signal, and the discharging duration of the bus capacitor can be controlled to be the preset duration, thereby effectively protecting the discharging device used for discharging the bus capacitor, improving the safety performance of the vehicle, and prolonging the service life of the discharging device. The discharging control apparatus for a bus capacitor according to one or more embodiments of the disclosure has the advantages of simple control, easy implementation, and cost saving.

FIG. 3 is a flowchart of a discharging control method for a bus capacitor according to one or more embodiments of the disclosure. The various steps shown in FIG.3 can be implemented using the discharging module and the control module illustrated in FIG. 1 and FIG. 2.

As shown in FIG. 3, in step S310, a discharging loop is formed with the bus capacitor via the discharging module in response to a discharging control signal being at a first level, so as to discharge the bus capacitor through the discharging loop. Optionally, in step S310, the discharging loop formed with the bus capacitor may also be disconnected in response to the discharging control signal being at a second level, so as to stop discharging the bus capacitor.

In step S320, duration of discharging the bus capacitor through the discharging loop is controlled, via a control module, to be a preset duration in response to the discharging control signal being at the first level.

Optionally, the discharging control signal may be from a motor controller, and is switched between the first level and the second level based on the control of the motor controller. Optionally, the discharging control signal may be alternatively from a vehicle control unit, and is switched between the first level and the second level based on the control of the vehicle control unit. Exemplarily, the first level may be set as a low level, and the second level may be set as a high level.

According to the discharging control method for a bus capacitor in an aspect of the disclosure, the discharging control of the bus capacitor can be realized through the control of the discharging control signal, and the discharging duration of the bus capacitor can be controlled to be the preset duration, thereby effectively protecting the discharging device used for discharging the bus capacitor, improving the safety performance of the vehicle, and prolonging the service life of the discharging device. The discharging control method for a bus capacitor according to one or more embodiments of the disclosure has the advantages of simple control, easy implementation, and cost saving.

In addition, the disclosure may alternatively be implemented as a vehicle, which includes the discharging control apparatus for a bus capacitor according to an aspect of the disclosure.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A discharging control apparatus for a bus capacitor, the discharging control apparatus comprising:
a discharging module connected to the bus capacitor and configured to form a discharging loop with the bus capacitor in response to a discharging control signal being at a first level, so as to discharge the bus capacitor through the discharging loop; and
a control module connected to the discharging module and configured to control, in response to the discharging control signal being at the first level, duration of discharging the bus capacitor through the discharging loop to be a preset duration.

2. The discharging control apparatus according to claim 1, wherein the discharging module is further configured to disconnect, in response to the discharging control signal being at a second level, the discharging loop formed with the bus capacitor, so as to stop discharging the bus capacitor.

3. The discharging control apparatus according to claim 1 or 2, wherein the discharging control signal is from a motor controller, and is switched between the first level and the second level based on the control of the motor controller.

4. The discharging control apparatus according to any one of claims 1 to 3, wherein the discharging module comprises a first power switch, a third power switch, and a first resistor element,
a gate of the first power switch is connected to a first terminal of the third power switch, a drain of the first power switch is connected to the first resistor element, and a source of the first power switch is grounded,
the first terminal of the third power switch is connected to a power supply, a second terminal of the third power switch is grounded, and a third terminal of the third power switch is used to receive the discharging control signal,
wherein the control module comprises a second power switch, a fourth power switch, a third resistor element, a fourth resistor element, and a capacitor element,
a gate of the second power switch is connected to a first terminal of the fourth power switch via the fourth resistor element, a drain of the second power switch is connected to the gate of the first power switch, and a source of the second power switch is grounded,
a second terminal of the fourth power switch is grounded, and a third terminal of the fourth power switch is used to receive the discharging control signal, and
the third resistor element is connected between the power supply and the capacitor element.

5. The discharging control apparatus according to claim 4, wherein the discharging module performs the following operations when the discharging control signal is at the first level:
turning off the third power switch to increase a gate voltage of the first power switch to a power supply voltage, so as to turn on the first power switch; and
forming a discharging loop with the bus capacitor via the first power switch and the first resistor element, so as to discharge the bus capacitor using the first resistor element,
wherein the discharging module performs the following operations when the discharging control signal is at the second level:
turning on the third power switch to reduce the gate voltage of the first power switch to a zero voltage level, so as to turn off the first power switch; and
disconnecting the discharging loop formed with the bus capacitor via the first power switch and the first resistor element, so as to stop discharging the bus capacitor,
wherein the control module performs the following operations when the discharging control signal is at the first level:
turning off the fourth power switch element, and using the power supply to charge the capacitor element via the third resistor element, such that a voltage across both terminals of the capacitor element is greater than or equal to a gate-on voltage threshold of the second power switch, so as to turn on the second power switch;
in response to the second power switch being turned on, reducing the gate voltage of the first power switch to a zero voltage level, so as to turn off the first power switch; and
disconnecting the discharging loop formed with the bus capacitor via the first power switch and the first resistor element, so as to stop discharging the bus capacitor,
wherein the control module performs the following operations when the discharging control signal is at the second level:
turning on the fourth power switch to form a discharging loop with the capacitor element via the fourth power switch and the fourth resistor element, so as to discharge the capacitor element using the fourth resistor element; and
turning off the second power switch in response to a voltage across both terminals of the capacitor element being less than the gate-on voltage threshold of the second power switch.

6. The discharging control apparatus according to claim 4 or 5, wherein the preset duration is set based on one or more of the following: a power supply voltage, a resistance value of the third resistor element, a capacitance value of the capacitor element, and the gate-on voltage threshold of the second power switch.

7. A discharging control method for a bus capacitor, the method comprising:
forming a discharging loop with the bus capacitor via a discharging module in response to a discharging control signal being at a first level, so as to discharge the bus capacitor through the discharging loop; and
controlling, via a control module, duration of discharging the bus capacitor through the discharging loop to be a preset duration in response to the discharging control signal being at the first level.

8. The discharging control method according to claim 7, wherein the method further comprises disconnecting, in response to the discharging control signal being at a second level, the discharging loop formed with the bus capacitor, so as to stop discharging the bus capacitor.

9. The discharging control method according to claim 7 or 8, wherein the discharging control signal is from a motor controller, and is switched between the first level and the second level based on the control of the motor controller.

10. A vehicle, comprising a discharging control apparatus for a bus capacitor according to any one of claims 1 to 6.
